# EUROPEAN PATENT APPLICATION

(11) **EP 4 840 742 A1**
(43) Date of publication of application: **18.11.2026**
(21) Application number: 25185974.0
(22) Date of filing: 27.06.2025
(51) Int. Cl.: B62K 15/00

(54) **SCOOTER**

(30) Priority: 16.05.2025 CN 202510633581
(71) Applicant: Intradin (Shanghai) Intelligent Machinery Co., Ltd., Shanghai 201109 (CN); Intradin (Shanghai) Machinery Co., Ltd., Shanghai 201109 (CN)
(72) Inventor: LI, Ping, Shanghai, 201109 (CN); QIAO, Xuetao, Shanghai, 201109 (CN); ZHOU, Yonggang, Shanghai, 201109 (CN)
(74) Representative: Vitina, Maruta

(57) **Abstract**

A scooter, including a first frame, a second frame, a connecting assembly, and a fixing assembly. The second frame is detachably connected to the first frame. The connecting assembly includes a pin provided on the second frame and a pin hole provided on the first frame. The pin and the pin hole extend along a longitudinal direction of the scooter. The fixing assembly includes a clamping mechanism and a hook. The clamping mechanism is rotatably provided on the first frame, and the hook is provided on the second frame. The clamping mechanism is configured to rotate in a direction close to or away from the hook to engage with or disengage from the hook, so as to secure or loosen the connection between the first frame and the second frame.

## Description

### TECHNICAL FIELD

This application relates to scooters, and more particularly to a scooter.

### BACKGROUND

A scooter is designed to facilitate movement of elderly, obese, disabled, or mobility-impaired individuals for outdoor activities such as camping. However, most of the existing scooters fail to be disassembled, making it difficult for elderly or mobility-impaired users to carry the scooter onto a vehicle or other means of transportation. Due to the large size and heavy weight, a lifting facility or assistance from others is often required.

### SUMMARY

An object of the disclosure is to provide a scooter to overcome the defects in the prior art.

Technical solutions of the present disclosure are described as follows.

A scooter, comprising:
a first frame;
a second frame;
a connecting assembly; and
a fixing assembly;
wherein the second frame is detachably connected to the first frame;
the connecting assembly comprises a first pin and a pin hole; the first pin is configured to extend in a longitudinal direction of the scooter; the first pin is provided on the second frame; and the pin hole is provided on the first frame;
the first pin is configured to be inserted into the pin hole to achieve a detachable connection between the first frame and the second frame;
the fixing assembly comprises a clamping mechanism and a first hook; the clamping mechanism is rotatably provided on the first frame, and the first hook is provided on the second frame; or the clamping mechanism is rotatably provided on the second frame, and the first hook is provided on the first frame; and
the clamping mechanism is configured to rotate in a direction close to or away from the first hook to engage with or disengage from the first hook, so as to secure or loosen the connection between the first frame and the second frame.

In some embodiments, the first pin is provided with a limiting fork, and the limiting fork is provided at an end of the first pin close to the pin hole;
the connecting assembly further comprises a second pin provided within the pin hole; and
in response to a case that the first pin is inserted into the pin hole, the limiting fork is configured to be clamped with the second pin.

In some embodiments, the connecting assembly further comprises a compression spring;
the first pin is internally provided with an accommodating groove; and the accommodating groove is communicated with the limiting fork, and is configured to extend in the length direction of the first pin;
the compression spring is provided within the accommodating groove in a length direction of the first pin; and
a first end of the compression spring is configured to abut against the first pin, and a second end of the compression spring is configured to abut against the second pin.

In some embodiments, the number of the first pin is two; and the number of the pin hole is two;
two first pins are respectively provided on two sides of the second frame;
two pin holes are respectively provided on two sides of the first frame; and
each of the two first pins is internally provided with the compression spring.

In some embodiments, the clamping mechanism comprises a locking fastenerand a hook assembly;
the locking fastener and the hook assembly are both rotatably provided onthe first frame or the second frame;
the hook assembly is provided on a side of the locking fastener close to the first pin;
the hook assembly is configured to rotate in the direction close to or away from the first hook to engage with or disengage from the first hook; and
the locking fastener is configured to rotate in a direction close to or away from the hook assembly to lock or release the hook assembly.

In some embodiments, the hook assembly comprises a trigger and a second hook;
the trigger is rotatably provided on the first frame or the second frame;
the trigger is configured to rotate in a direction close to or away from the locking fastener to allow the locking fastener to lock or release the trigger; and
the second hook is rotatably mounted to the trigger; and
the second hook is configured to rotate in the direction close to or away from the first hook to engage with or disengage from the first hook.

In some embodiments, the trigger comprises a rotating segment, an engaging segment and a connecting segment;
the rotating segment is rotatably connected to the first frame or the second frame;
the connecting segment is provided between the rotating segment and the engaging segment;
the second hook is rotatably mounted to the connecting segment; and
the engaging segment is configured to rotate in the direction close to or away from the locking fastener to engage with or disengage from the locking fastener.

In some embodiments, the trigger further comprises a rotating shaft;
the second hook is fixedly connected to the rotating shaft;
the rotating shaft is rotatably connected to the connecting segment;
two ends of the rotating shaft are configured to respectively extend out of two sides of the connecting segment; and
in response to a case that the trigger is rotated to drive the two ends of the rotating shaft to abut against the first frame or the second frame, the locking fastener is configured to be engaged with the engaging segment.

In some embodiments, the scooter further comprises a controller and a driving assembly;
the controller is provided on the first frame;
the driving assembly is provided on the second frame;
the controller is electrically connected to the driving assembly;
the controller is configured to control operation of the driving assembly; and
the driving assembly is configured to drive the scooter to move.

In some embodiments, the scooter further comprises a magnetic male connector and a magnetic female connector;
the magnetic male connector is provided on the first frame, and is electrically connected to the controller via a first signal wire;
the magnetic female connector is provided on the second frame, and is electrically connected to the driving assembly via a second signal wire; and
the magnetic male connector is configured to be magnetically engaged with the magnetic female connector to establish electrical connection between the controller and the driving assembly.

Compared to the prior art, the present disclosure has the following beneficial effects.

The scooter is provided with the first frame and the second frame, and the first frame is detachably connected to the second frame, thereby reducing the weight and volume during transportation. The connecting assembly and the fixing assembly are further provided. When the first frame and the second frame are assembled, the first pin is inserted into the pin hole, thereby enabling the connection between the first frame and the second frame. The clamping mechanism is rotated in a diretion close to the first hook until it is engaged with the first hook, thereby securing the connection between the first frame and the second frame. When disassembly is needed, the clamping mechanism is rotated in a direction away from the first hook to disengage from the first hook, thereby enabling the separation of the first frame from the second frame and facilitating disassembly. Through this split-structure design, the scooter can be easily assembled or disassembled simply by rotating the clamping mechanism, thereby improving the convenience and flexibility of use. Elderly users or individuals with limited mobility can easily lift the scooter into a vehicle, thereby avoiding the inconvenience caused by the large size or excessive weight of conventional scooters.

### BRIEF DESCRIPTION OF THE DRAWINGS

In order to illustrate the technical solutions in the embodiments of the present disclosure or the prior art more clearly, the accompanying drawings needed in the description of the embodiments or prior art will be briefly described below. Obviously, presented in the accompanying drawings are only some embodiments of the present disclosure, and for those of ordinary skill in the art, other accompanying drawings can be obtained from the structures illustrated therein without making creative effort.
Fig. 1 is a structural diagram of a scooter according to an embodiment of the present disclosure;
Fig. 2 is an enlarged view of portion "A" in Fig. 1;
Fig. 3 is a structural diagram of the scooter according to an embodiment of the present disclosure in a disassembled configuration;
Fig. 4 is an enlarged view of portion "B" in Fig. 3;
Fig. 5 is a structural diagram of a first pin according to an embodiment of the present disclosure;
Fig. 6 is a partial structural diagram of the scooter according to an embodiment of the present disclosure; and
Fig. 7 is a structural diagram of a magnetic male connector according to an embodiment of the present disclosure in a disassembled state.

In the figures: 1-first frame; 11-support rod; 12-bearing beam; 13-avoidance groove; 2-second frame; 3-connecting assembly; 31-first pin; 32-pin hole; 33-limiting fork; 34-second pin; 35-compression spring; 36-accommodating groove; 4-fixing assembly; 40-clamping mechanism; 41-first hook; 42-locking fastener; 43-hook assembly; 44-trigger; 45-second hook; 46-rotating segment; 461-rotating portion; 47-engaging segment; 48-connecting segment; 481-support arm; 49-rotating shaft; 5-controller; 6-driving assembly; 61-driving part; 62-battery; 7-magnetic male connector; 71-magnetic signal connector; 72-fixing seat; 8-magnetic female connector; and 9-signal wire.

The implementation, functional characteristics and advantages of the present disclosure will be further described in conjunction with the embodiments and accompanying drawings.

### DETAILED DESCRIPTION OF EMBODIMENTS

The technical solutions in the embodiments of the present disclosure will be described clearly and completely below in conjunction with the accompanying drawings. It is obvious that the described embodiments are merely some embodiments of the present disclosure, instead of all embodiments. Based on the embodiments in the present disclosure, all other embodiments obtained by those of ordinary skill in the art without making creative effort shall fall within the scope of the present disclosure.

It should be noted that all directional indications (such as up, down, left, right, front, and back) are used only for explaining the relative positional relationship or movement between the components in a particular attitude (as shown in the accompanying drawings), and the directional indications will be correspondingly changed if the particular attitude is changed.

As used herein, terms such as "first" and "second" are only descriptive, and should not be construed as indicating or implying their relative importance or implicitly specifying the number of technical features indicated. As a result, a feature defined as "first" or "second" may include at least one of such feature, either explicitly or implicitly. In addition, "and/or" includes three solutions, for example, "A and/or B" includes technical solution A, technical solution B, and a combination thereof. In addition, the technical solutions of various embodiments may be combined with each other on the premise that the combined solution can be implemented by those of ordinary skill in the art. When the combination of technical solutions appears to be contradictory or unimplementable, it should be understood that such a combination does not exist and is not included within the scope of the present disclosure.

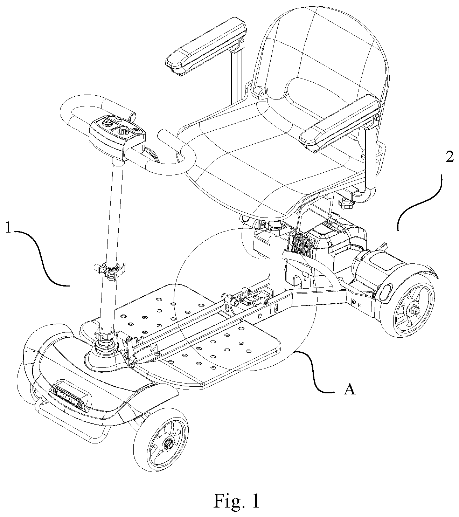

As shown in Figs. 1-6, an embodiment of the present disclosure provides a scooter, including a first frame 1, a second frame 2, a connecting assembly 3 and a fixing assembly 4. The second frame 2 is detachably connected to the first frame 1. The connecting assembly 3 includes a first pin 31 and a pin hole 32. The first pin 31 and the pin hole 32 are configured to extend in a longitudinal direction of the scooter. The first pin 31 is provided on the second frame 2. The pin hole 32 is provided on the first frame 1. When the first frame 1 is connected to the second frame 2, the first pin 31 is configured to be inserted into the pin hole 32 to achieve a detachable connection between the first frame 1 and the second frame 2. The fixing assembly 4 includes a clamping mechanism 40 and a first hook 41. The clamping mechanism 40 is rotatably provided on the first frame 1, and the first hook 41 is provided on the second frame 2, or the clamping mechanism 40 is rotatably provided on the second frame 2, and the first hook 41 is provided on the first frame 1. The clamping mechanism 40 is configured to rotate in a direction close to or away from the first hook 41 to engage with or disengage from the first hook 41, so as to secure or loosen the connection between the first frame 1 and the second frame 2.

The scooter is provided with the first frame 1 and the second frame 2, and the first frame 1 is detachably connected to the second frame 2, thereby reducing the weight and volume during transportation. The scooter is further provided with the connecting assembly 3 and the fixing assembly 4. When the first frame 1 and the second frame 2 are assembled, the first pin 31 is inserted into the pin hole 32, thereby enabling the connection between the first frame 1 and the second frame 2. The clamping mechanism 40 is rotated in a direction close to the first hook 41 until it is engaged with the first hook 41, thereby securing the connection between the first frame 1 and the second frame 2. When disassembly is needed, the clamping mechanism 40 is rotated in a direction away from the first hook 41 to disengage from the first hook 41, thereby enabling the separation of the first frame 1 from the second frame 2 and facilitating disassembly. Through this split-structure design, the scooter can be easily assembled or disassembled simply by rotating the clamping mechanism 40, thereby improving the convenience and flexibility of use. Elderly users or individuals with limited mobility can easily lift the scooter into a vehicle, thereby avoiding the inconvenience caused by the large size or excessive weight of conventional scooters.

Specifically, by means of the first pin 31 and the pin hole 32, when the first pin 31 is inserted into the pin hole 32 to a certain depth, a rigid connection is formed between the first pin 31 and the pin hole 32 in the longitudinal direction of the scooter.

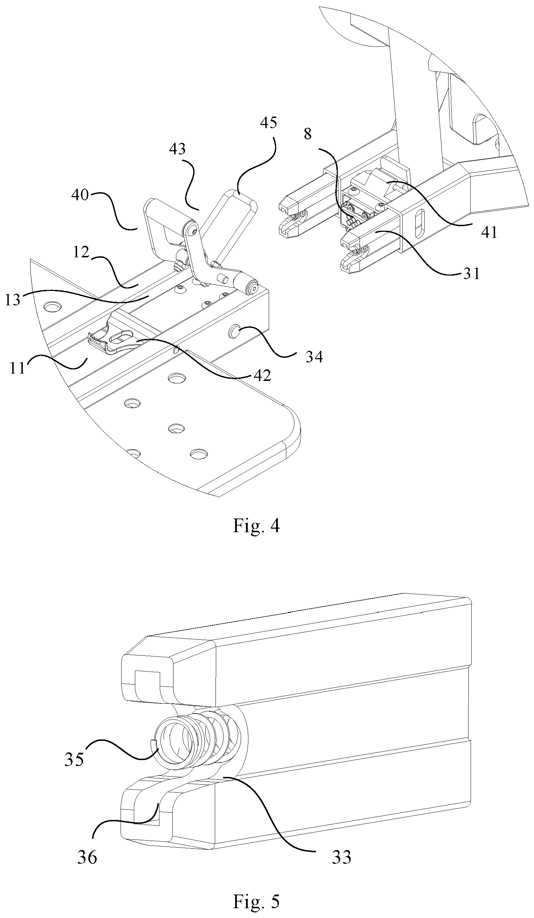

Referring to Figs. 4-5, the first pin 31 is provided with a limiting fork 33, and the limiting fork 33 is provided at an end of the first pin 31 close to the pin hole 32. The connecting assembly 3 further includes a second pin 34 provided within the pin hole 32. When the first pin 31 is inserted into the pin hole 32, the limiting fork 33 is configured to be clamped with the second pin 34.

In this embodiment, the number of the first pin 31 is two. The number of the pin hole 32 is two. Two first pins 31 are respectively provided on two sides of the second frame 2. Two pin holes 32 are respectively provided on two sides of the first frame 1.

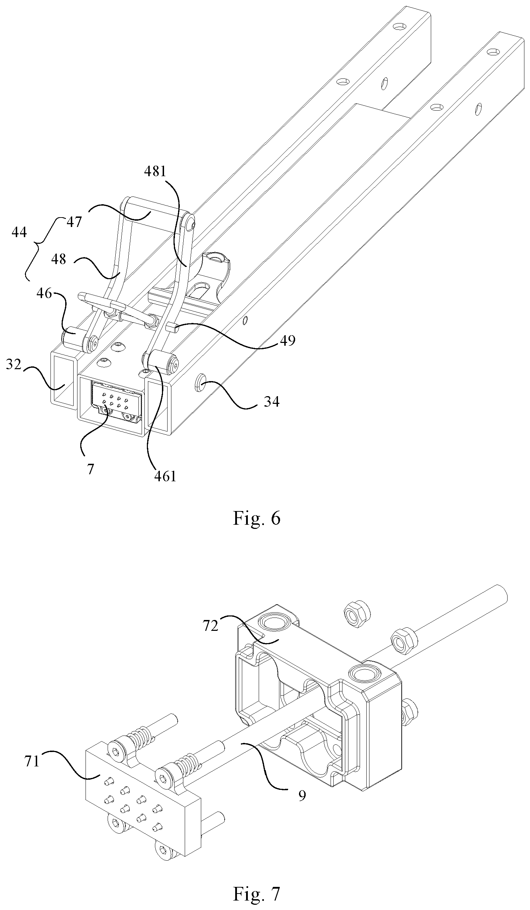

Referring to Figs. 4 and 6, the first frame 1 includes a support rod 11 and two bearing beams 12. The two bearing beams 12 are respectively provided on two sides of the support rod 11, and are each configured to extend in the longitudinal direction of the scooter. Each of the two bearing beams 12 is hollow to form the pin hole 32 therein. The limiting pin 34 is configured to extend transversely through each of the two bearing beams 12.

In this embodiment, a top surface of each of the two bearing beams 12 is higher than a top surface of the support rod 11, such that side walls of the two bearing beams 12 and the top surface of the support rod 11 are together configured to enclose an avoidance groove 13 to accommodate the clamping mechanism 40. The clamping mechanism 40 is rotatably connected to top surfaces of the two bearing beams 12.

Specifically, each of the two first pins 31 is provided with a limiting fork 33. The limiting fork 33 is configured to extend transversely through an end of the first pin 31 close to the pin hole 32. The limiting fork 33 is configured to match the second pin 34. By means of the limiting fork 33 and the second pin 34, the insertion depth of the first pin 31 can be restricted. When the first pins 31 are inserted to a predetermined position, the second pin 34 serves as a stopper to prevent further inward movement of the first pins 31.

Referring to Figs. 4 and 5, the connecting assembly 3 further includes a compression spring 35. Each of the two first pins 31 is internally provided with an accommodating groove 36. The accommodating groove 36 is communicated with the limiting fork 33, and is configured to extend in the length direction of the first pin 31. The compression spring 35 is provided within the accommodating groove 36 in the length direction of the first pin 31. A first end of the compression spring 35 is configured to abut against the first pin 31, and a second end of the compression spring 35 is configured to abut against the second pin 34. By providing the compression spring 35, rigid collision between the limiting fork 33 and the second pin 34 can be avoided during assembly. During disassembly, the elastic force of the compression spring 35 facilitates pushing out the first pin 31, thereby facilitating disassembly of the scooter.

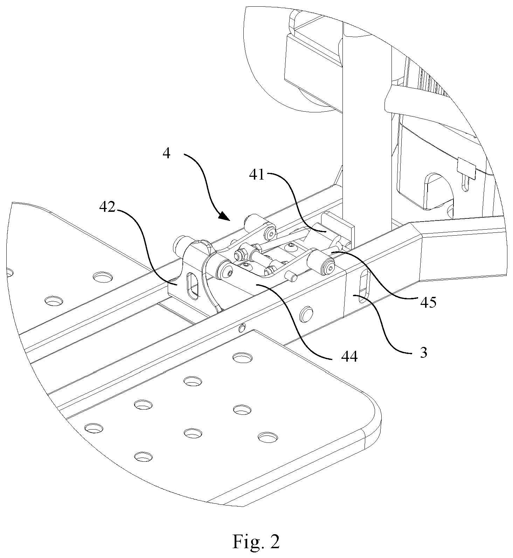

Referring to Figs. 2 and 4, the clamping mechanism 40 includes a locking fastener 42 and a hook assembly 43. The locking fastener 42 and the hook assembly 43 are both rotatably provided on the first frame 1 or the second frame 2. The hook assembly 43 is located on a side of the locking fastener 42 close to the first pin 31. The hook assembly 43 is configured to rotate in the direction close to or away from the first hook 41 to engage with or disengage from the first hook 41. The locking fastener 42 is configured to rotate in a direction close to or away from the hook assembly 43 to lock or release the hook assembly 43.

Referring to Figs. 4 to 6, the hook assembly 43 includes a trigger 44 and a second hook 45. The trigger 44 is rotatably provided on the first frame 1 or the second frame 2. The trigger 44 is configured to rotate in a direction close to or away from the locking fastener 42 to allow the locking fastener 42 to lock or release the trigger 44. The second hook 45 is rotatably mounted to the trigger 44. The second hook 45 is configured to rotate in the direction close to or away from the first hook 41 to engage with or disengage from the first hook 41.

Specifically, the locking fastener 42 is located within the avoidance groove 13. The locking fastener 42 is rotatably connected to the side walls of the two bearing beams 12, respectively. The trigger 44 is rotatably mounted on the top surfaces of the two bearing beams 12.

Referring to Fig. 6, the trigger 44 includes a rotating segment 46, an engaging segment 47, and a connecting segment 48. The rotating segment 46 is rotatably connected to the first frame 1 or the second frame 2. The connecting segment 48 is provided between the rotating segment 46 and the engaging segment 47. The second hook 45 is rotatably mounted to the connecting segment 48. The engaging segment 47 is configured to rotate in the direction close to or away from the locking fastener 42 to engage with or disengage from the locking fastener 42.

Specifically, the rotating segment 46 includes two rotating portions 461. The two rotating portions 461 are respectively rotatably mounted to the top surfaces of the two bearing beams 12. The connecting segment 48 includes two support arms 481. The two rotating portions 461 are respectively connected to bottom ends of the two support arms 481. The engaging segment 47 is provided between the two support arms 481, and is connected to top ends of the two support arms 481, respectively.

Furthermore, the engaging segment 47 has a cylindrical shape. The two support arms 481 are obtuse-angled arms. The avoidance groove 13 is configured to accommodate the two support arms 481.

Referring to Fig. 6, the trigger 44 further includes a rotating shaft 49. The second hook 45 is fixedly connected to the rotating shaft 49. The rotating shaft 49 is rotatably connected to the connecting segment 48. Two ends of the rotating shaft 49 are configured to respectively extend out of two sides of the connecting segment 48. When the trigger 44 is rotated to drive the two ends of the rotating shaft 49 to abut against the top surfaces of the two bearing beams 12, the locking fastener 42 is configured to be engaged with the engaging segment 47, and an inner wall of an end of the second hook 45 away from the rotating shaft 49 is configured to abut against a side wall of the first hook 41.

Specifically, the two ends of the rotating shaft 49 respectively extend out of the two support arms 481.

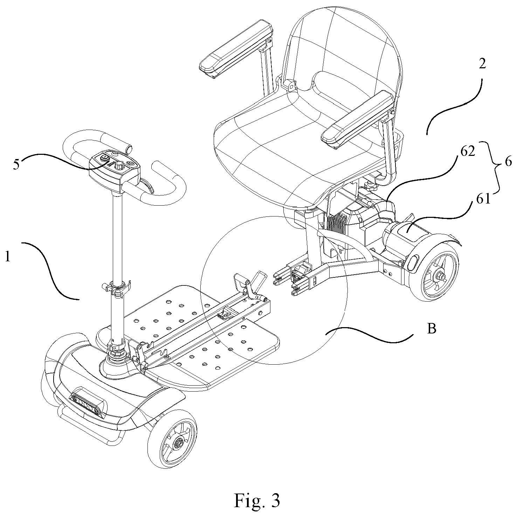

Referring to Fig. 3, the scooter further includes a controller 5 and a driving assembly 6. The controller 5 is provided on the first frame 1. The driving assembly 6 is provided on the second frame 2. The controller 5 is electrically connected to the driving assembly 6, and is configured to control operation of the driving assembly 6. The driving assembly 6 is configured to drive the scooter to move.

Specifically, a bottom of the first frame 1 is provided with two wheels, and a bottom of the second frame 2 is provided with two wheels.

In this embodiment, the first frame 1 is a front frame, and the second frame 2 is a rear frame. The clamping mechanism 40 is rotatably mounted on the first frame 1. The first hook 41 is provided on the second frame 2. The controller 5 is provided on a handle of the first frame 1. The driving assembly 6 includes a driving part 61 and a battery 62 that are electrically connected. The battery 62 is provided on the second frame 2, and is electrically connected to the controller 5. The driving part 61 is provided on a side of one of two wheels of the second frame 2. The driving part 61 is configured to drive the two wheels of the second frame 2 to rotate. Specifically, the driving part 61 is a hub motor.

In an embodiment, the first pin 31 is provided on the first frame 1. The pin hole 32 is provided on the second frame 2. The clamping mechanism 40 is rotatably mounted on the second frame 2. The first hook 41 is provided on the first frame 1.

A working principle of the present disclosure is as follows. When the scooter is switched from a disassembled state to an assembled state, the first pins 31 are inserted into the pin holes 32 until the limiting fork 33 engages with the second pin 34. Then, the trigger 44 is rotated in a direction close to the first pins 31 to drive the second hook 45 to move in the direction close to the first pins 31, so that the second hook 45 engages with the first hook 41. Then, the trigger 44 is rotated in a direction away from the first pins 31 until the two ends of the rotating shaft 49 abut against the top surfaces of the two bearing beams 12, thereby tightly engaging the second hook 45 with the first hook 41. Finally, the locking fastener 42 is rotated in a direction close to the trigger 44 until the locking fastener 42 engages with the engaging segment 47 of the trigger 44 to lock the trigger 44, thereby completing the assembly of the scooter. When the scooter is switched from the assembled state to the disassembled state, the locking fastener 42 is rotated in a direction away from the trigger 44, such that the locking fastener 42 is disengaged from the engaging segment 47 of the trigger 44. Then, the trigger 44 is rotated in the direction close to the first pins 31, thereby reducing a distance between the rotating shaft 49 and the first hook 41 to allow the second hook 45 to be disengaged from the first hook 41. Then, the trigger 44 is rotated in the direction away from the first pins 31 to drive the second hook 45 to move away from the first pins 31. Finally, the first pins 31 are pulled out from the pin holes 32, thereby completing the disassembly of the scooter.

Referring to Figs. 4, 6, and 7, the scooter further includes a magnetic male connector 7 and a magnetic female connector 8. The magnetic male connector 7 is provided on the first frame 1, and is electrically connected to the controller 5 via a first signal wire 9. The magnetic female connector 8 is provided on the second frame 2, and is electrically connected to the driving assembly 6 via a second signal wire 9. The magnetic male connector 7 is configured to be magnetically engaged with the magnetic female connector 8 to achieve electrical connection between the controller 5 and the driving assembly 6. By arranging the magnetic male connector 7 and the magnetic female connector 8, the electrical wiring of the scooter is configured with a magnetic quick-connect/disconnect structure, allowing the wiring harness to be automatically separated or joined during disassembly or assembly of the scooter, thereby avoiding obstruction to the separation of scooter components.

In this embodiment, the magnetic male connector 7 and the magnetic female connector 8 have the same structure. Specifically, the magnetic male connector 7 includes a magnetic signal connector 71 and a fixing seat 72. The fixing seat 72 is provided within the support rod 11. The magnetic signal connector 71 is connected to the fixing seat 72 via a screw. A first end of the signal wire 9 is electrically connected to the magnetic signal connector 71, and a second end of the signal wire 9 is electrically connected to the controller 5.

Described above are merely preferred embodiments of the present disclosure, and are not intended to limit the scope of the present disclosure. It should be understood that various modifications, changes and replacements made by those skilled in the art without departing from the spirit of the disclosure shall fall within the scope of the present disclosure defined by the appended claims.

## Claims

1. A scooter, comprising:
a first frame;
a second frame;
a connecting assembly; and
a fixing assembly;
**characterized in that** the second frame is detachably connected to the first frame;
the connecting assembly comprises a first pin and a pin hole; the first pin and the pin hole are configured to extend in a longitudinal direction of the scooter; the first pin is provided on the second frame; and the pin hole is provided on the first frame;
the first pin is configured to be inserted into the pin hole to achieve a detachable connection between the first frame and the second frame;
the fixing assembly comprises a clamping mechanism and a first hook;
the clamping mechanism is rotatably provided on the first frame, and the first hook is provided on the second frame; or the clamping mechanism is rotatably provided on the second frame, and the first hook is provided on the first frame; and
the clamping mechanism is configured to rotate in a direction close to or away from the first hook to engage with or disengage from the first hook, so as to secure or loosen connection between the first frame and the second frame.

2. The scooter according to claim 1, **characterized in that** the first pin is provided with a limiting fork, and the limiting fork is provided at an end of the first pin close to the pin hole;
the connecting assembly further comprises a second pin provided within the pin hole; and
in response to a case that the first pin is inserted into the pin hole, the limiting fork is configured to be clamped with the second pin.

3. The scooter according to claim 2, **characterized in that** the connecting assembly further comprises a compression spring;
the first pin is internally provided with an accommodating groove; and the accommodating groove is communicated with the limiting fork, and is configured to extend in a length direction of the first pin;
the compression spring is provided within the accommodating groove in the length direction of the first pin; and
a first end of the compression spring is configured to abut against the first pin, and a second end of the compression spring is configured to abut against the second pin.

4. The scooter according to claim 3, **characterized in that** the number of the first pin is two; and the number of the pin hole is two;
two first pins are respectively provided on two sides of the second frame;
two pin holes are respectively provided on two sides of the first frame; and
each of the two first pins is internally provided with the compression spring.

5. The scooter according to claim 1, **characterized in that** the clamping mechanism comprises a locking fastener and a hook assembly;
the locking fastener and the hook assembly are both rotatably provided on the first frame or the second frame;
the hook assembly is provided on a side of the locking fastener close to the first pin;
the hook assembly is configured to rotate in the direction close to or away from the first hook to engage with or disengage from the first hook; and
the locking fastener is configured to rotate in a direction close to or away from the hook assembly to lock or release the hook assembly.

6. The scooter according to claim 5, **characterized in that** the hook assembly comprises a trigger and a second hook;
the trigger is rotatably provided on the first frame or the second frame;
the trigger is configured to rotate in a direction close to or away from the locking fastener to allow the locking fastener to lock or release the trigger; and
the second hook is rotatably mounted to the trigger; and
the second hook is configured to rotate in the direction close to or away from the first hook to engage with or disengage from the first hook.

7. The scooter according to claim 6, **characterized in that** the trigger comprises a rotating segment, an engaging segment and a connecting segment;
the rotating segment is rotatably connected to the first frame or the second frame;
the connecting segment is provided between the rotating segment and the engaging segment;
the second hook is rotatably mounted to the connecting segment; and
the engaging segment is configured to rotate in the direction close to or away from the locking fastener to engage with or disengage from the locking fastener.

8. The scooter according to claim 7, **characterized in that** the trigger further comprises a rotating shaft;
the second hook is fixedly connected to the rotating shaft;
the rotating shaft is rotatably connected to the connecting segment;
two ends of the rotating shaft are configured to respectively extend out of two sides of the connecting segment; and
in response to a case that the trigger is rotated to drive the two ends of the rotating shaft to abut against the first frame or the second frame, the locking fastener is configured to be engaged with the engaging segment.

9. The scooter according to claim 1, **characterized in that** the scooter further comprises a controller and a driving assembly;
the controller is provided on the first frame;
the driving assembly is provided on the second frame;
the controller is electrically connected to the driving assembly;
the controller is configured to control operation of the driving assembly; and
the driving assembly is configured to drive the scooter to move.

10. The scooter according to claim 9, **characterized in that** the scooter further comprises a magnetic male connector and a magnetic female connector;
the magnetic male connector is provided on the first frame, and is electrically connected to the controller via a first signal wire;
the magnetic female connector is provided on the second frame, and is electrically connected to the driving assembly via a second signal wire; and
the magnetic male connector is configured to be magnetically engaged with the magnetic female connector to establish electrical connection between the controller and the driving assembly.

## Amended claims

### Amended claims in accordance with Rule 137(2) EPC.

1. A scooter, comprising:
a first frame (1);
a second frame (2);
a connecting assembly (3); and
a fixing assembly (4);
the second frame (2) is detachably connected to the first frame (1);
the connecting assembly (3) comprises a first pin (31) and a pin hole (32); the first pin (31) and the pin hole (32) are configured to extend in a longitudinal direction of the scooter; the first pin (31) is provided on the second frame (2); and the pin hole (32) is provided on the first frame (1);
the first pin (31) is configured to be inserted into the pin hole (32) to achieve a detachable connection between the first frame (1) and the second frame (2);
the fixing assembly (4) comprises a clamping mechanism (40) and a first hook (41);
the clamping mechanism (40) is rotatably provided on the first frame (1), and the first hook (41) is provided on the second frame (2); or the clamping mechanism (40) is rotatably provided on the second frame (2), and the first hook (41) is provided on the first frame (1); and
the clamping mechanism (40) is configured to rotate in a direction close to or away from the first hook (41) to engage with or disengage from the first hook (41), so as to secure or loosen connection between the first frame (1) and the second frame (2);
**characterized in that**:
the first pin (31) is provided with a limiting fork (33), and the limiting fork (33) is provided at an end of the first pin (31) close to the pin hole (32);
the connecting assembly (3) further comprises a second pin (34) provided within the pin hole (32);
in response to a case that the first pin (31) is inserted into the pin hole (32), the limiting fork (33) is configured to be clamped with the second pin (34);
the connecting assembly (3) further comprises a compression spring (35);
the first pin (31) is internally provided with an accommodating groove; and the accommodating groove is communicated with the limiting fork (33), and is configured to extend in a length direction of the first pin (31);
the compression spring (35) is provided within the accommodating groove in the length direction of the first pin (31); and
a first end of the compression spring (35) is configured to abut against the first pin (31), and a second end of the compression spring (35) is configured to abut against the second pin (34).

2. The scooter according to claim 1, **characterized in that** the number of the first pin (31) is two; and the number of the pin hole (32) is two;
two first pins (31) are respectively provided on two sides of the second frame (2);
two pin holes (32) are respectively provided on two sides of the first frame (1); and
each of the two first pins (31) is internally provided with the compression spring (35).

3. The scooter according to claim 1, **characterized in that** the clamping mechanism (40) comprises a locking fastener (42) and a hook assembly (43);
the locking fastener (42) and the hook assembly (43) are both rotatably provided on the first frame (1) or the second frame (2);
the hook assembly (43) is provided on a side of the locking fastener (42) close to the first pin (31);
the hook assembly (43) is configured to rotate in the direction close to or away from the first hook (41) to engage with or disengage from the first hook (41); and
the locking fastener (42) is configured to rotate in a direction close to or away from the hook assembly (43) to lock or release the hook assembly (43).

4. The scooter according to claim 3, **characterized in that** the hook assembly (43) comprises a trigger (44) and a second hook (45);
the trigger (44) is rotatably provided on the first frame (1) or the second frame (2);
the trigger (44) is configured to rotate in a direction close to or away from the locking fastener (42) to allow the locking fastener (42) to lock or release the trigger (44); and
the second hook (45) is rotatably mounted to the trigger (44); and
the second hook (45) is configured to rotate in the direction close to or away from the first hook (41) to engage with or disengage from the first hook (41).

5. The scooter according to claim 4, **characterized in that** the trigger (44) comprises a rotating segment (46), an engaging segment (47) and a connecting segment (48);
the rotating segment (46) is rotatably connected to the first frame (1) or the second frame (2);
the connecting segment (48) is provided between the rotating segment (46) and the engaging segment (47);
the second hook (45) is rotatably mounted to the connecting segment (48); and
the engaging segment (47) is configured to rotate in the direction close to or away from the locking fastener (42) to engage with or disengage from the locking fastener (42).

6. The scooter according to claim 5, **characterized in that** the trigger (44) further comprises a rotating shaft (49);
the second hook (45) is fixedly connected to the rotating shaft (49);
the rotating shaft (49) is rotatably connected to the connecting segment (48);
two ends of the rotating shaft (49) are configured to respectively extend out of two sides of the connecting segment (48); and
in response to a case that the trigger (44) is rotated to drive the two ends of the rotating shaft (49) to abut against the first frame (1) or the second frame (2), the locking fastener (42) is configured to be engaged with the engaging segment (47).

7. The scooter according to claim 1, **characterized in that** the scooter further comprises a controller (5) and a driving assembly (6);
the controller (5) is provided on the first frame (1);
the driving assembly (6) is provided on the second frame (2);
the controller (5) is electrically connected to the driving assembly (6);
the controller (5) is configured to control operation of the driving assembly (6); and
the driving assembly (6) is configured to drive the scooter to move.

8. The scooter according to claim 7, **characterized in that** the scooter further comprises a magnetic male connector (7) and a magnetic female connector (8);
the magnetic male connector (7) is provided on the first frame (1), and is electrically connected to the controller (5) via a first signal wire;
the magnetic female connector (8) is provided on the second frame (2), and is electrically connected to the driving assembly (6) via a second signal wire; and
the magnetic male connector (7) is configured to be magnetically engaged with the magnetic female connector (8) to establish electrical connection between the controller (5) and the driving assembly (6).
